# EUROPEAN PATENT APPLICATION

(11) **EP 0 756 958 A2**
(43) Date of publication of application: **05.02.1997**
(21) Application number: 96112388.2
(22) Date of filing: 31.07.1996
(51) Int. Cl.: B60N 2/06

(54) **Seat slide device**

(30) Priority: 01.08.1995 JP 196727/95
(71) Applicant: FUJIKIKO KABUSHIKI KAISHA, Tokyo (JP)
(72) Inventor: Kimata, Toshihiro, Kosai-shi, Shizuoka-ken (JP); Negi, Yoshitaka, Kosai-shi, Shizuoka-ken (JP)
(74) Representative: Grünecker, Kinkeldey, Stockmair & Schwanhäusser Anwaltssozietät

(57) **Abstract**

A seat slide device comprises: a pair of lower rails (20, 120, 220) fixed to a vehicle floor being arranged in parallel to each other at an interval, each of the lower rails being formed with at least two U-shaped cross-section angled portions (24, 25; 125; 224); a pair of upper rails (30, 130, 230) fixed to a vehicle seat being arranged in parallel to each other at an interval and movably engaged with the lower rails, respectively, each of the upper rails being formed with at least two U-shaped cross-section angled portions (34, 35; 134; 235); and at least two resin sliders (40) interposed between the two U-shaped cross-section angled portions (24, 25; 125; 224) of the lower rail and the two U-shaped cross-section angled portions (35, 34; 134; 235) of the upper rails, respectively in such a way as to be fixedly fitted to at least two cutout portions (24b, 34b; 125b; 235b) formed in the U-shaped cross-section angled portions (24, 34; 125; 235) of the lower/upper rails, respectively. Even when the engagement area or length between the lower rail and the upper rail is reduced as when the upper rail is moved relative to the lower rail to its extreme position, since the resin slider can be firmly engaged with the engage portions formed in the lower/upper rails, it is possible to prevent the resin sliders from being removed from the lower/upper rails.

## Description

### BACKGROUND OF THE INVENTION

### Field of the Invention

The present invention relates to a seat slide device used with a vehicle seat mounted on an automotive vehicle, and more specifically to a seat slide device provided with resin sliders interposed between two parallel arranged lower rails and upper rails, respectively to improve the slide feeling between the two rails in the vehicle longitudinal direction and to reduce play (looseness) between the two rails in the vehicle lateral direction.

### Description of the Prior Art

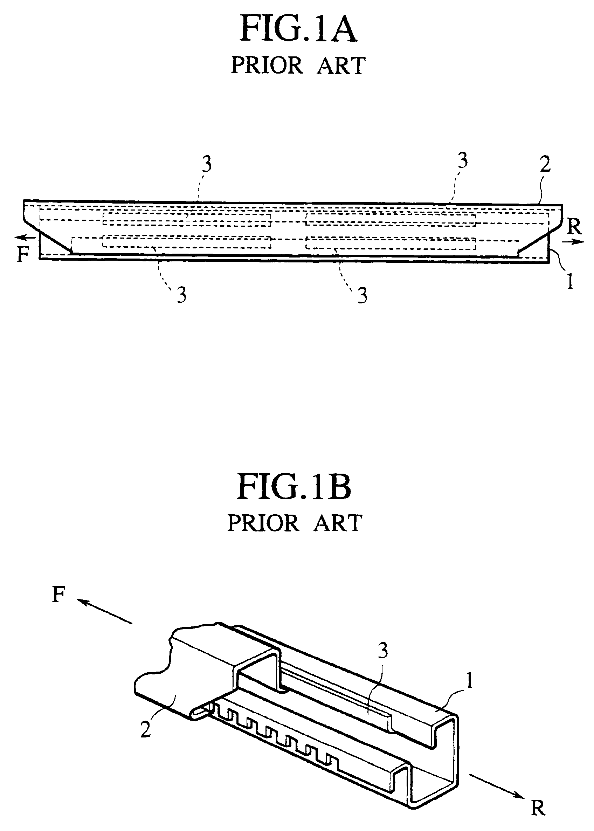

Figs. 1A and 1B show an example of prior art seat slide devices, in which only one side of a pair of lower and upper rails is shown for brevity. In practice, however, two pairs of a lower rail 1 fixed to a vehicle floor and an upper rail 2 fixed to a seat are arranged on the vehicle floor in parallel to each other, being spaced at an interval in the vehicle right and left direction and extending in the vehicle front and rear direction. Further, a plurality of resin sliders 3 are interposed between each lower rail 1 and each upper rail 2 on both front and rear sides of the seat slide device, respectively to improve the slidable engagement between the lower and upper rails 1 and 2.

In the above-mentioned prior art seat slide device, however, when the upper rail 2 is moved relative to the lower rail 1 to its front position as shown in Fig. 1B to facilitate loading or unloading a baggage on or from the vehicle rear seat, for instance, since the engagement area or the engagement length between the lower rail 1 and the upper rail 2 via the resin slider 3 is reduced, the resin slider 3 is exposed. Therefore, in case a baggage is brought into contact with the resin slider 3, there arises a problem in that the resin slider 3 is floated upward or removed from the lower rail 1. In this connection, when the engagement length or area between the two rails is increased, the above-mentioned problem may be prevented. In this case, however, it is difficult to arrange the long rails on the vehicle floor, and in addition the cost of the seat slide device inevitably increases.

### SUMMARY OF THE INVENTION

With these problem in mind, therefore, it is the object of the present invention to provide a seat slide device, which can prevent the resin slider from being easily removed from the lower rail, even if the vehicle seat is moved to its frontmost or rearmost position.

To achieve the above-mentioned object the present invention provides a seat slide device, comprising: a pair of lower rails (20, 120, 220) fixed to a vehicle floor being arranged in parallel to each other at an interval, each of said lower rails being formed with at least two U-shaped cross-section angled portions (24, 25; 125; 224); a pair of upper rails (30, 130, 230) fixed to a vehicle seat being arranged in parallel to each other at an interval and movably engaged with said lower rails, respectively, each of said upper rails being formed with at least two U-shaped cross-section angled portions (34, 35; 134; 235); and at least two resin sliders (40) interposed between the two U-shaped cross-section angled portions (24, 25; 125; 224) of said lower rail and the two U-shaped cross-section angled portions (35, 34; 134; 235) of said upper rails, respectively in such a way as to be fixedly fitted to at least two cutout portions (24b, 34b; 125b; 235b) formed in the U-shaped cross-section angled portions (24, 34; 125; 235) of said lower/upper rails, respectively.

In the first embodiment of the present invention, said lower rail (20) is formed with an upper inner U-shaped cross-section angled portion (24) and a lower outer U-shaped cross-section angled portion (25); said upper rail (30) is formed with an upper outer U-shaped cross-section angled portion (35) and a lower inner U-shaped cross-section angled portion (34); said at least two resin sliders are interposed between the upper inner U-shaped cross-section angled portion (24) of said lower rail (20) and the upper outer U-shaped cross-section angled portion (35) of said upper rail (30), and between the lower outer U-shaped cross-section angled portion (25) of said lower rail (20) and the lower inner U-shaped cross-section angled portion (34) of said upper rail (30), respectively; and said at least two resin sliders (40) are fitted to one cutout portion (24b) formed in the U-shaped cross-section angled portions (24) of said lower rail, and to one cutout portion (34b) formed in the U-shaped cross-section angled portion (34) of said upper rail; and an end hook portion (42) of said resin slider is engaged with an L-shaped engage portion (24a, 34a) formed in the vicinity of the cutout portion (24b, 34b) formed in the U-shaped cross-section angled portion (24, 34) of said lower and upper rails, respectively.

Further, in the second embodiment of the present invention, said lower rail (120) is formed with two upper outer U-shaped cross-section angled portions (125) on both sides thereof; said upper rail (130) is formed with two lower inner U-shaped cross-section angled portions (134) on both sides thereof; said at least two resin sliders (40) are interposed between the two upper outer U-shaped cross-section angled portions (125) of said lower rail (120) and the two lower inner U-shaped cross-section angled portions (134) of said upper rail (130), respectively; and said at least two resin sliders (40) are fitted to two cutout portions (125b) formed in the U-shaped cross-section angled portions (125) of said lower rail (120), respectively; an end hook portion(42) of said resin slider is engaged with an L-shaped engage portion (125a) formed in the vicinity of the cutout portion (125b) formed in the upper outer U-shaped cross-section angled portion (125) of said lower rail, respectively.

Further, in the third embodiment of the present invention, said lower rail (220) is formed with two upper inner U-shaped cross-section angled portions (224) on both sides thereof; said upper rail (230) is formed with two lower outer U-shaped cross-section angled portions (235) on both sides thereof; said at least two resin sliders (40) are interposed between the two upper inner U-shaped cross-section angled portions (224) of said lower rail (220) and the two lower outer U-shaped cross-section angled portions (235) of said upper rail (230), respectively; and said at least two resin sliders are fitted to two cutout portions (235b) formed in the U-shaped cross-section angled portions (235) of said upper rail (230), respectively; an end hook portion (42) of said resin slider is engaged with an L-shaped engage portion (235a) formed in the vicinity of the two cutout portions (235b) formed in the lower outer U-shaped cross-section angled portions (235) of said upper rail, respectively.

In the seat slide device according to the present invention, even when the seat is moved to the frontmost position or the rearmost position and thereby the engagement area between the lower and upper rails is reduced, since the resin slider is firmly fitted to the cutout portions and further firmly engaged with the engage portions formed in the lower rail and/or the upper rail, respectively, it is possible to prevent the resin sliders from being floated or removed from the lower and upper rails, without increasing the length of the lower and upper rails and thereby the cost of the seat slide device.

### BRIEF DESCRIPTION OF THE DRAWINGS

Fig. 1A is a side view showing an example of the prior art seat slide devices;
Fig. 1B is a partial perspective view showing one end of the prior art seat slider device shown in Fig. 1A;
Fig. 2A is a side view showing a first embodiment of the seat slide device according to the present invention;
Fig. 2B is a cross-sectional view taken along the line 2BL-2BL in Fig. 1A;
Fig. 3A is a side view showing a lower rail of the first embodiment of the seat slide device according to the present invention;
Fig. 3B is a cross-sectional view taken along the line 3BL-3BL in Fig. 3A;
Fig. 4A is a side view showing an upper rail of the first embodiment of the seat slide device according to the present invention;
Fig. 4B is a cross-sectional view taken along the line 4BL-4BL in Fig. 4A;
Fig. 5A is a side view showing a resin slider of the first embodiment of the seat slide device according to the present invention;
Fig. 5B is a cross-sectional view taken along the line 5BL-5BL in Fig. 5A;
Fig. 5C is a side view obtained when seed from the side as shown by the line 5CL-5CL in Fig. 5B;
Fig. 6 is a side view for assistance in explaining the function of the first embodiment of the seat slide device according to the present invention;
Fig. 7A is a side view showing a second embodiment of the seat slide device according to the present invention;
Fig. 7B is a cross-sectional view taken along the line 7BL-7BL in Fig. 7A;
Fig. 7C is a side view showing a lower rail of the second embodiment of the seat slide device according to the present invention;
Fig. 8A is a side view showing a third embodiment of the seat slide device according to the present invention;
Fig. 8B is a cross-sectional view taken along the line 8BL-8BL in Fig. 8A; and
Fig. 8C is a side view showing a lower rail of the third embodiment of the seat slide device according to the present invention.

### DETAILED DESCRIPTION OF THE PREFERRED EMBODIMENTS

Embodiments of the seat slide device according to the present invention will be described hereinbelow with reference to the attached drawings.

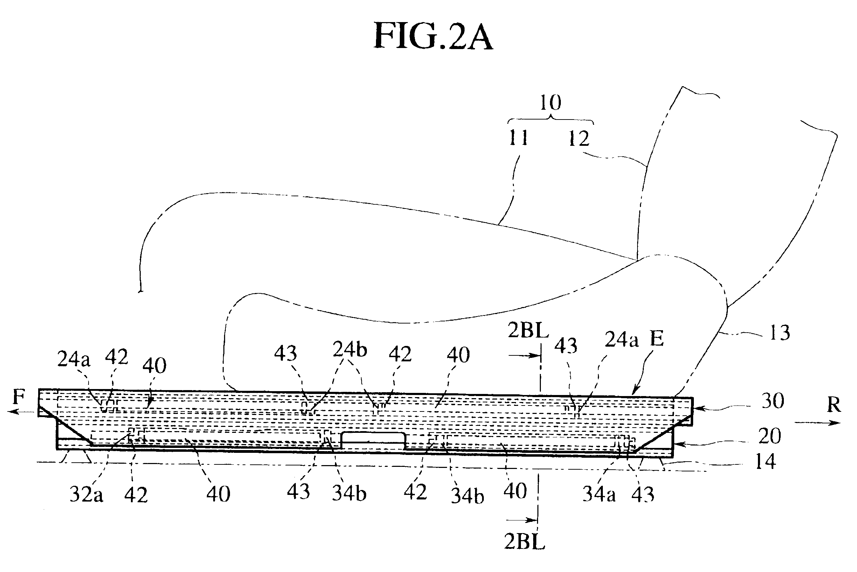

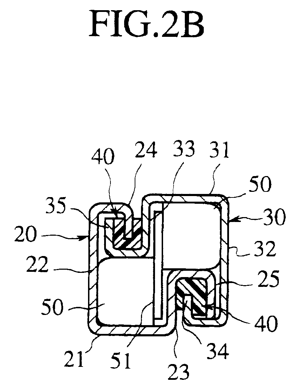

Figs. 2A and 2B show a first embodiment thereof. In Fig. 2A, a seat slide device E attached to a vehicle seat 10 is composed of two pairs of lower rail 20 fixed to a vehicle floor and upper rail 30 fixed to the vehicle seat. The two pairs of rails are arranged in parallel to each other on the vehicle floor, being spaced from each other in the vehicle lateral (right and left) direction and extending in the vehicle longitudinal (front and rear) direction. Further, as shown in Fig. 2A, a plurality (e.g., four) of resin sliders 40 are interposed between the lower rail 20 and the upper rail 30, respectively on both the front and rear sides of the seat slide device, respectively.

The features of the seat slide device according to the present invention are that (1) two U-shaped cross-section angled portions of the lower rail and two U-shaped cross-section angled portions of the upper rail are engaged with each other via a plurality (e.g., four) of resin slides on both the right and left sides and the front and rear sides of the seat slide device, respectively; and (2) a plurality (e.g., four) of resin sliders are fixedly attached to the lower and/or upper rails, respectively by fitting the both ends (projections) of each resin slider to cutout portions formed in the lower/upper rails, respectively.

In more detail, in Fig. 2A, a vehicle seat 10 is composed of a seat cushion 11 and a seat back 12. Further, two base plates 13 (only one is shown in Fig. 2A) are disposed on both right and left sides of the seat cushion 11.

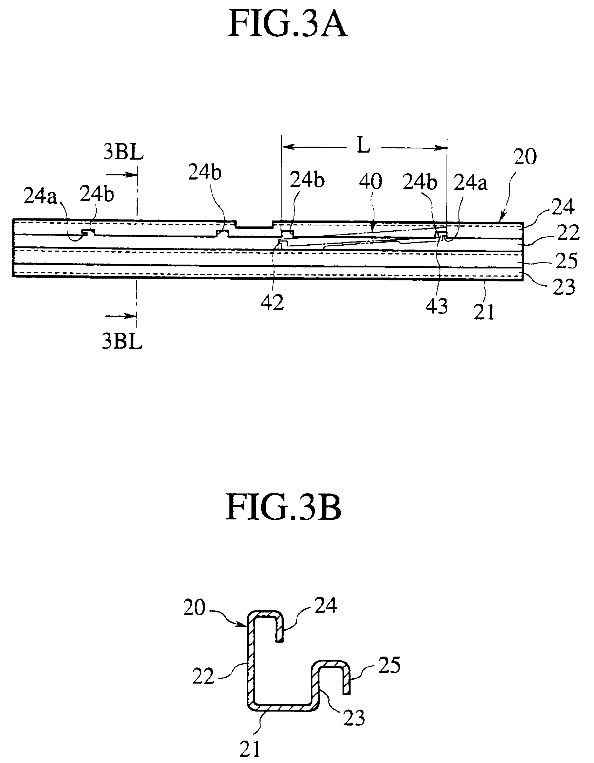

As shown in Fig. 3B, each lower rail 20 is formed with a base portion 21 fixed to a floor 14 (shown in Fig. 2A), a long side wall portion 22 and a short side wall portion 23 both bent upward from the base portion 21 at right angles, and a reverse U-shaped cross-section upper inner angled portion 24 and a reverse U-shaped cross-section lower outer angled portion 25. A pair of the right and left lower rails 20 is fixed to the vehicle floor 14 in parallel to each other being spaced at an interval in such a way the two lower rails 20 are opposed to each other.

Further, as shown in Fig. 3A, the upper inner angled portion 24 of the lower rail 20 is formed with four cutout portions 24b (to each of which an end (described later) of the resin slider 40 is fitted). In addition, an L-shaped engage portion 24a (with which an end of the resin slider is engaged) is formed in the vicinity of each outside cutout portion 24b a distance L away form the inside cutout portion 24b.

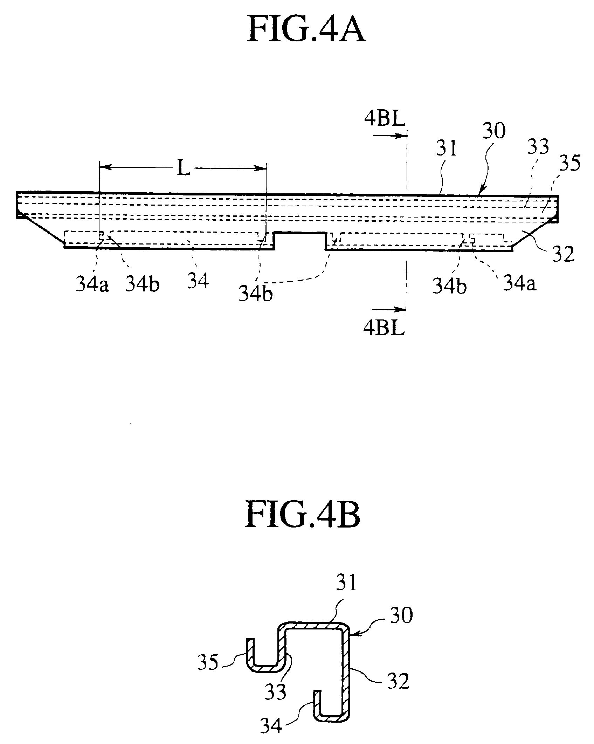

On the other hand, as shown in Fig. 4B, each upper rail 30 is formed with a base portion 31 fixed to the seat 10, a long side wall portion 32 and a short side wall portion 33 both bent downward from the base portion 31 at right angles, and a U-shaped cross-section upper outer angled portion 35 and a U-shaped cross-section lower inner angled portion 34. A pair of the right and left upper rails 30 is fixed to the seat 10 in parallel to each other being spaced at an interval in such a way as to be opposed to each other into engagement with the lower rails 20.

Further, as shown in Fig. 4A, the lower inner angled portion 34 of the upper rail 30 is formed with four cutout portions 34b (to each of which the end of the resin slider 40 is fitted). In addition, an L-shaped engage portion 34a (with which the end of the resin slider 40 is engaged) is formed in the vicinity of each outside cutout portion 34b a distance L away form the inside cutout portion 34b.

Here, the cross-sectional shapes of the lower and upper rails 20 and 30 are the same with respect to each other. Further, the shapes of the cutout portions 24b and 34b are the same with respect to each other, and the shapes of the L-shaped engage portions 24a and 34a are also the same with respect to each other.

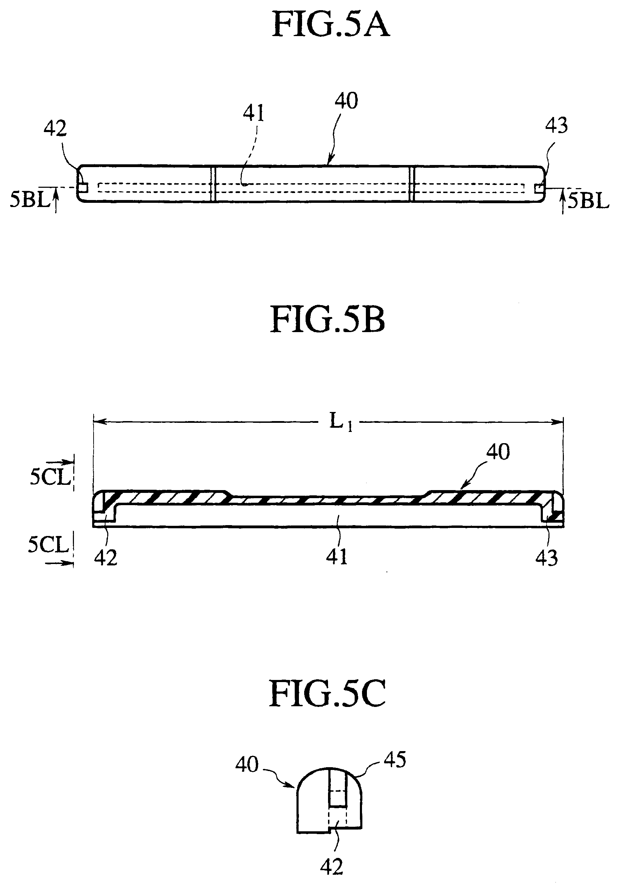

In Figs. 5A, 5B and 5C, the resin slider 40 is formed of synthetic resin and formed with a U-shaped cross-section narrow engage groove 41 fitted to the upper inner angled portion 24 of the lower rail 20 or the lower inner angled portion 34 of the upper rail 30. Further, the resin slider 40 is formed with two L-shaped end hook portions 42 and 43 on both end surfaces thereof so as to be engaged with the cutout portions 24b and 34b and the L-shaped engage portions 24a and 34a of the lower and upper rail 20 or 30, respectively.

Further, the outer surface 45 of the resin slider 40 is fitted to the lower outer angled portion 25 of the lower rail 20 and the upper outer angled portion 35 of the upper rail 30, respectively, when the resin sliders 40 are fitted to the lower and upper rails, respectively.

Further, a distance L1 (shown in Fig. 5B) between the two hook portions 42 and 43 of the resin slider 40 is determined slightly smaller than the distance L (shown in Fig. 3A or 4A) between the two cutout portions 24b or 34b of the lower or upper rail 20 or 30. Further, the outer shape of the two hook portions 42 and 43 of the resin slider 40 is determined slightly smaller than the inner shape (shown in Fig. 3A or 4A) of the cutout portion 24b or 34b and the L-shaped engage portion 24a or 34a of the lower or upper rail 20 or 30, respectively.

Further, as shown in Fig. 2B, two rollers 50 are interposed between the lower rail 20 and the upper rail 30 by use of a retainer 51 interposed between the two rollers 50, in order to improve the slidability between the two rails 20 and 30.

In assembly of the resin slider 40 with the lower rail 20, for instance, as indicated by phantom line in Fig. 3A, the engage groove 41 formed in the resin slider 40 is engaged with the lower end surface of the upper inner angled portion 24 of the lower rail 20, by first inclining the left side of the resin slider 40 downward relative to the lower rail 20. Further, after the resin slider 40 is kept in the horizontal direction, the L-shaped end hook portion 42 of the resin slider 40 is fitted to the cutout portion 24b formed in the U-shaped cross-section angle portion 24 of the lower rail 20 in such a way that the end hook portion 42 of the resin slider 40 can be engaged with the L-shaped engage portion 24a formed in the vicinity of the cutout portion 24 of the lower rail 20. Under these conditions, the resin slider 40 can be fixedly fitted to the upper inner angled portion 24 of the lower rail 20. The remaining another resin slider 40 can be fitted to the other cutout portion 24b formed in the lower rail 20 in the same way as above.

Further, the other resin sliders 40 can be fitted to the lower inner angled portion 34 of the upper rail 30 in quite the same way as above. In other words, since the resin sliders 40 can be fitted to and further engaged with both the lower and upper rails 20 and 30 in roughly the same way as with the case of the prior art seat slide device, the assembly workability will not deteriorate.

After the fitting of the resin sliders 40 to the lower and upper rails 20 and 30, the upper outer angle portion 35 of the upper rail 30 is engaged with the outer surface 45 of the resin sliders 40 fitted to the upper outer angled portion 24 of the lower rail 20, and further the lower outer angle portion 25 of the lower rail 20 is engaged with the outer surface 45 of the resin slider 40 fitted to the lower inner angled portion 34 of the upper rail 30. In this case, the two roller 50 are interposed between the lower and upper rails 20 and 30, respectively by disposing a retainer 51 between the two rollers 50. Therefore, it is possible to assemble both the lower rail 20 and the upper rail 30 via the four resin sliders 40 without any plays between both the rails 20 and 30. In the above-mentioned assembly work, since the two L-shaped end hook portions 42 and 43 of the resin slider 40 can be fitted to the cutout portion 24b or 34b and engaged with the L-shaped engage portion 24a or 34a formed in the lower rail 20 or the upper rail 30, respectively and therefore not easily removed from the rail 20 or 30, the lower and upper rails 20 and 30 can be engaged with each other easily, thus improving the assembly workability.

In the seat slide device according to the present invention constructed as described above, under the normal conditions, since the resin sliders 40 are engaged between the upper inner angled portion 24 of lower rail 20 and the upper outer angle portion 35 of the upper rail 30 and further since the resin sliders 40 are engaged between the lower inner angled portion 34 of upper rail 30 and the lower outer angle portion 25 of the lower rail 20, respectively, the resin sliders 40 cannot be seen from the outside.

Under these normal conditions, when the upper rail 30 is moved to its frontmost position on the front (F) side, since the engagement area or length between the lower rail 20 and the upper rail 30 engaged via the resin sliders 40 is reduced, the resin slider 40 fitted to the front (F) side of the upper rail 30 and the resin slider 40 fitted to the rear (R) side of the lower rail 20 are both mostly exposed.

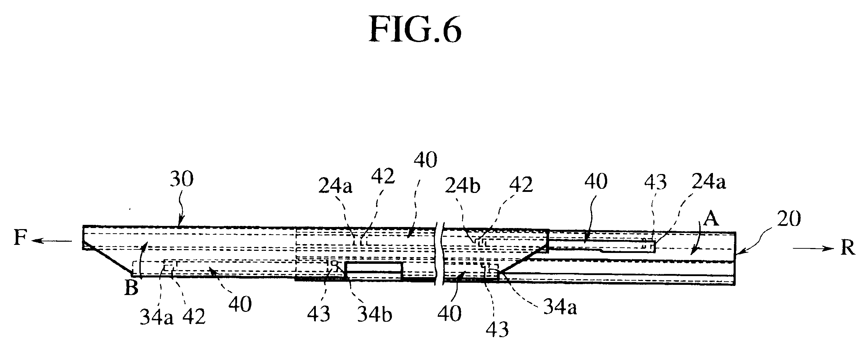

In the case of the resin slider 40 fitted to the lower rail 20, however, since the end hook portion 43 formed on the rear side R of the resin slider 40 is engaged with the L-shaped engage portion 24a of the lower rail 20, in case an external force is applied to the resin slide 40 accidentally in the arrow direction A as shown in Fig. 6, it is possible to prevent the resin slide 40 from being floated downward or removed from the lower rail 20.

On the other hand, in the case of the resin slider 40 fitted to the upper rail 30, since the end hook portion 42 formed on the front side F of the resin slider 40 is engaged with the L-shaped engage portion 34a of the upper rail 30, in case an external force is applied to the resin slide 40 in the arrow direction B as shown in Fig. 6, it is possible to prevent the resin slide 40 from being floated upward or removed from the upper rail 30.

Further, when the upper rail 30 is moved to its rearmost position on the rear (R) side, the same effect as described above can be obtained.

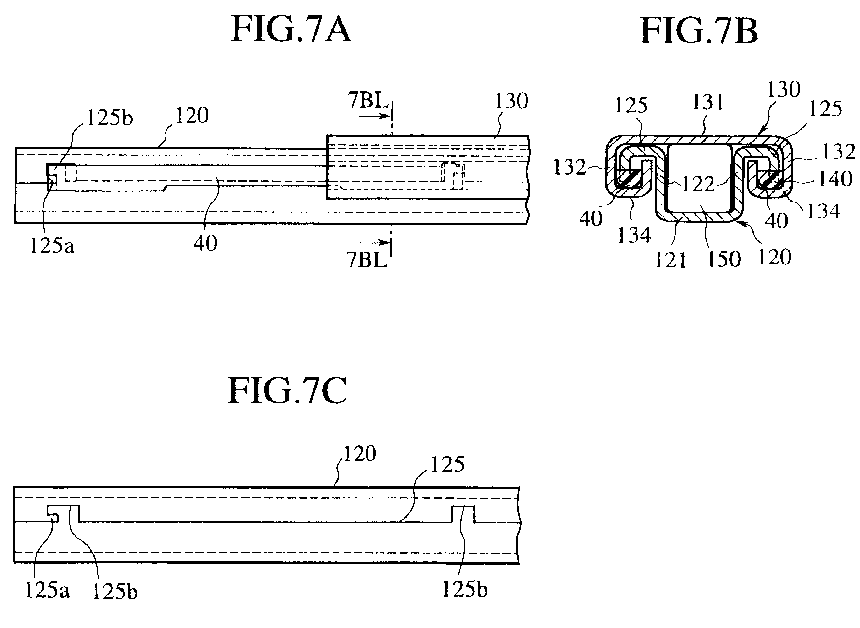

A second embodiment of the resin slider device according to the present invention will be described hereinbelow with reference to Figs. 7A, 7B and 7C, in which a C-type lower and upper rails 120 and 130 are used.

In Fig. 7B, a lower rail 120 is formed with a base portion 121 fixed to the floor, two side wall portions 122 both bent upward from the base portion 121 at right angles, and two reverse U-shaped cross-section upper outer angled portions 125. Further, as shown in Fig. 7C, the upper outer angled portions 125 of the lower rail 120 are each formed with two cutout portions 125b (to each of which an end hook portion 42 or 43 of the resin slider 40 is fitted). In addition, an L-shaped engage portion 125a (with which the end hook portion 42 or 43 of the resin slider 40 is engaged) is formed in the vicinity of each outside cutout portion 125b.

In Fig. 7B, an upper rail 130 is formed with a base portion 131 fixed to the seat, two side wall portion 132 both bent downward from the base portion 131 at right angles, and two U-shaped lower inner angled portions 134.

The resin slides 40 used for this second embodiment are basically the same as with the case of the first embodiment shown in Figs. 5A, 5B and 5C.

In assembly of the resin slider 40 with the lower rail 120, the engage groove 41 formed in the resin slider 40 is engaged with the lower outer angled portion 125 of the lower rail 120, by first inclining the resin slider 40 relative to the lower rail 120 in such a way the left side of the resin slider 40 is directed downward. Further, after the resin slider 40 is kept in the horizontal direction, the left side end of the resin slider 40 is fitted to the cutout portion 125b formed in the lower rail 120 in such a way that the hook portion 42 of the resin slider 40 can be engaged with the L-shaped engage portion 125a formed of the lower rail 120. Under these conditions, the resin slider 40 can be fixedly fitted to the upper outer angled portion 125 of the lower rail 120. The remaining other resin slider 40 can be also fixedly fitted to the other cutout portion 125b and the engage portion 125a formed in the lower rail 120 in the same way as above. In this second embodiment, the resin sliders 40 are fitted to only the upper outer angled portions 125 of the lower rail 120, because the assembly workability is better than that of the upper rail 130.

After that, the two lower inner angle portions 134 of the upper rail 130 are engaged with the outer surfaces 45 of the resin sliders 40 fitted to the lower inner angled portions 125 of the lower rail 120. In this case, a roller 150 is interposed between the lower rail 120 and the upper rail 130. Therefore, it is possible to assemble both the lower rail 120 and the upper rail 130 via the four resin sliders 40 without any plays between both the rails 120 and 130. In the above-mentioned assembly work, since the two end hook portions 42 and 43 of the resin slider 40 can be fitted to the cutout portion 125b and engaged with the L-shaped engage portion 125a of the lower rail 120 and therefore not easily removed from the lower rail 120, the lower and upper rails 120 and 130 can be engaged with each other easily, thus improving the assembly workability.

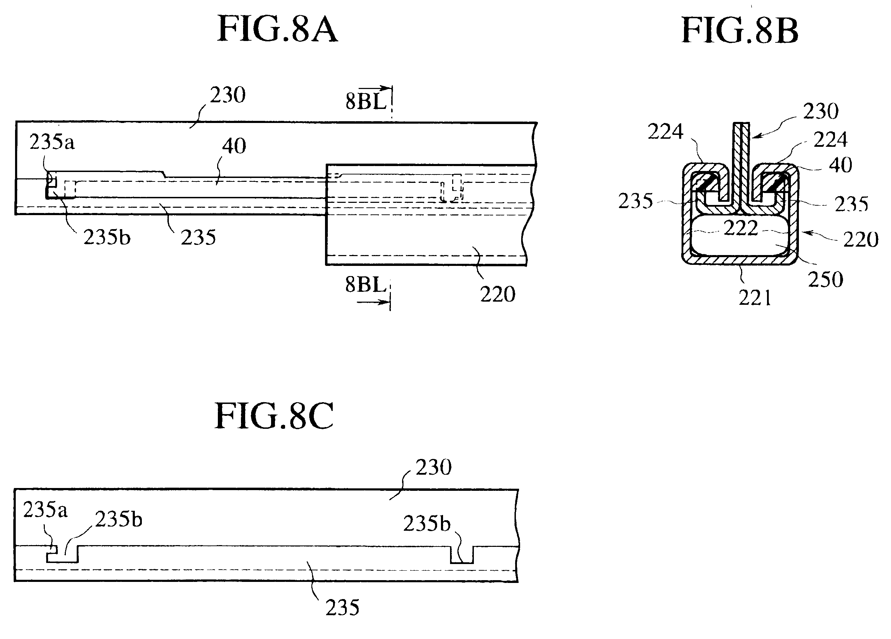

A third embodiment of the resin slider device according to the present invention will be described hereinbelow with reference to Figs. 8A, 8B and 8C, in which a reverse T-type upper rail 230 is used.

In Fig. 8B, a lower rail 220 is formed with a base portion 221 fixed to the floor, two side wall portions 222 both bent upward from the base portion 221 at right angles, and two reverse U-shaped cross-section upper inner angled portions 224.

In Fig. 8B, an upper rail 230 is formed with two U-shaped lower outer angled portions 235. Further, as shown in Fig. 8A, the lower outer angled portions 235 of the upper rail 230 are each formed with two cutout portions 235b (to each of which the end hook portion 42 or 43 of the resin slider 40 is fitted), In addition, an L-shaped engage portion 235a (with which the end hook portion 42 or 43 of the resin slider 40 is engaged) is formed in the vicinity of each outside cutout portion 235b.

The resin slides 40 used for this third embodiment are basically the same as with the case of the first embodiment shown in Figs. 5A, 5B and 5C.

In assembly of the resin slider 40 with the upper rail 230, the engage groove 41 formed in the resin slider 40 is engaged with the lower outer angled portion 235 of the upper rail 230, by first inclining the resin slider 40 relative to the upper rail 230 in such a way the left side of the resin slider 40 is directed upward. Further, after the resin slider 40 is kept in the horizontal direction, the left side end of the resin slider 40 is fitted to the cutout portion 235b formed in the lower outer angled portion 235 of upper rail 230 in such a way that the end hook portion 42 of the resin slider 40 can be engaged with the L-shaped engage portion 235a formed of the lower outer angled portion 235 of the upper rail 230. Under these conditions, the resin slider 40 can be fixedly fitted to the lower outer angled portion 235 of the upper rail 230. The remaining other resin slider 40 can be also fixedly fitted to the other cutout portion 235b and the engage portion 235a formed in the upper rail 230 in the same way as above. In this third embodiment, the remaining resin sliders 40 are also fitted to the lower outer angled portions 235 of the upper rail 230, because the assembly workability is better than that of the lower rail 220.

After that, the two upper outer angle portions 224 of the lower rail 220 are engaged with the outer surfaces 45 of the resin sliders 40 fitted to the lower outer angled portions 235 of the upper rail 230. In this case, a roller 250 is interposed between the lower and upper rails 220 and 230. Therefore, it is possible to assemble both the lower rail 220 and the upper rail 230 via the four resin sliders 40 without any plays between both the rails. In the above-mentioned assembly work, since the two hook portions 42 and 43 of the resin slider 40 can be fitted to the cutout portion 235b and engaged with the L-shaped engage portion 235a of the upper rail 130 and therefore not easily removed from the rails, the lower and upper rails 220 and 230 can be engaged with each other easily, thus improving the assembly workability.

As described above, in the resin slider device according to the present invention, even when the engagement area or length between the lower rail and the upper rail is reduced as when the upper rail is moved relative to the lower rail to its extreme position, since the resin slider can be firmly engaged with the engage portions formed in the lower/upper rails, it is possible to prevent the resin sliders from being removed from the lower/upper rails. As a result, it is possible to obtain the maximum movement stroke of the upper rail relative to the lower rail, even when the lengths of the lower rail and upper rail is minimized.

## Claims

1. A seat slide device, comprising:
a pair of lower rails (20, 120, 220) fixed to a vehicle floor being arranged in parallel to each other at an interval, each of said lower rails being formed with at least two U-shaped cross-section angled portions (24, 25; 125; 224);
a pair of upper rails (30, 130, 230) fixed to a vehicle seat being arranged in parallel to each other at an interval and movably engaged with said lower rails, respectively, each of said upper rails being formed with at least two U-shaped cross-section angled portions (34, 35; 134; 235); and
at least two resin sliders (40) interposed between the two U-shaped cross-section angled portions (24, 25; 125; 224) of said lower rail and the two U-shaped cross-section angled portions (35, 34; 134; 235) of said upper rails, respectively in such a way as to be fixedly fitted to at least two cutout portions (24b, 34b; 125b; 235b) formed in the U-shaped cross-section angled portions (24, 34; 125; 235) of said lower/upper rails, respectively.

2. The seat slide device of claim 1, wherein:
said lower rail (20) is formed with an upper inner U-shaped cross-section angled portion (24) and a lower outer U-shaped cross-section angled portion (25);
said upper rail (30) is formed with an upper outer U-shaped cross-section angled portion (35) and a lower inner U-shaped cross-section angled portion (34);
said at least two resin sliders are interposed between the upper inner U-shaped cross-section angled portion (24) of said lower rail (20) and the upper outer U-shaped cross-section angled portion (35) of said upper rail (30), and between the lower outer U-shaped cross-section angled portion (25) of said lower rail (20) and the lower inner U-shaped cross-section angled portion (34) of said upper rail (30), respectively; and
said at least two resin sliders (40) are fitted to one cutout portion (24b) formed in the U-shaped cross-section angled portions (24) of said lower rail, and to one cutout portion (34b) formed in the U-shaped cross-section angled portion (34) of said upper rail; and an end hook portion (42) of said resin slider is engaged with an L-shaped engage portion (24a, 34a) formed in the vicinity of the cutout portion (24b, 34b) formed in the U-shaped cross-section angled portion (24, 34) of said lower and upper rails, respectively.

3. The seat slide device of claim 1, wherein:
said lower rail (120) is formed with two upper outer U-shaped cross-section angled portions (125) on both sides thereof;
said upper rail (130) is formed with two lower inner U-shaped cross-section angled portions (134) on both sides thereof;
said at least two resin sliders (40) are interposed between the two upper outer U-shaped cross-section angled portions (125) of said lower rail (120) and the two lower inner U-shaped cross-section angled portions (134) of said upper rail (130), respectively; and
said at least two resin sliders (40) are fitted to two cutout portions (125b) formed in the U-shaped cross-section angled portions (125) of said lower rail (120), respectively; an end hook portion(42) of said resin slider is engaged with an L-shaped engage portion (125a) formed in the vicinity of the cutout portion (125b) formed in the upper outer U-shaped cross-section angled portion (125) of said lower rail, respectively.

4. The seat slide device of claim 1, wherein:
said lower rail (220) is formed with two upper inner U-shaped cross-section angled portions (224) on both sides thereof;
said upper rail (230) is formed with two lower outer U-shaped cross-section angled portions (235) on both sides thereof;
said at least two resin sliders (40) are interposed between the two upper inner U-shaped cross-section angled portions (224) of said lower rail (220) and the two lower outer U-shaped cross-section angled portions (235) of said upper rail (230), respectively; and
said at least two resin sliders are fitted to two cutout portions (235b) formed in the U-shaped cross-section angled portions (235) of said upper rail (230), respectively; an end hook portion (42) of said resin slider is engaged with an L-shaped engage portion (235a) formed in the vicinity of the two cutout portions (235b) formed in the lower outer U-shaped cross-section angled portions (235) of said upper rail, respectively.

5. The seat slide device of claim 1, which further comprises at least one roller (50, 150 250) interposed between said lower and upper rails.
